# DEMANDE DE BREVET EUROPEEN

(11) **EP 2 108 266 A1**
(43) Date de publication de la demande: **14.10.2009**
(21) Numéro de dépôt: 09290256.8
(22) Date de dépôt: 07.04.2009
(51) Int. Cl.: A23J 1/00, A23J 1/02, A23J 1/04

(54) **Procédé d'obtention de protéines à partir d'un traitement de tissus adipeux**

(30) Priorité: 11.04.2008 FR 0802003
(71) Demandeur: SNC Cornille, 35500 Cornille (FR)
(72) Inventeur: Aignel, Denis, 35510 Cesson Sevigne (FR)
(74) Mandataire: Bezault, Jean

(57) **Abrégé**

L'invention se rapporte à un procédé d'obtention de produit protéinique. Le procédé comprend plusieurs étapes permettant l'obtention d'un produit protéinique avec de fortes propriétés émulsifiantes. Ces étapes comprennent une première étape de choisir des tissus d'animaux collectés en abattoirs et/ou ateliers de découpe, une seconde étape de traiter de ces tissus pour obtenir un milieu décanté comprenant d'une part une phase solide et d'autre part une phase liquide, une troisième étape de dégraisser une partie au moins du milieu décanté de la seconde étape, cette troisième étape générant des eaux de procédés dégraissées, et une étape d'isoler des protéines à partir des eaux de procédés dégraissées générées à la troisième étape.

## Description

L'invention se rapporte à un procédé d'obtention de produit protéinique. L'invention se rapporte également à un produit émulsifiant.

Les émulsifiants trouvent leurs applications dans de nombreux domaines technologiques, avec notamment une application accrue dans l'industrie alimentaire ou cosmétique. Généralement, on entend par émulsifiant un agent chimique ou biochimique qui permet de stabiliser des mélanges de deux substances liquides non miscibles.

Ces mélanges non miscibles sont appelés des émulsions, et on y retrouve classiquement une première substance (phase discontinue) dispersée sous forme de gouttelettes dans une seconde substance (phase continue).

Parmi les émulsions les plus connues on retrouve les émulsions eau dans huile (E/H) ou les émulsions huile dans eau (H/E). Comme les noms l'indiquent, une émulsion eau dans huile est composée d'une phase aqueuse dispersée dans une phase huileuse, tandis que qu'une émulsion huile dans eau est composée d'une phase huileuse dispersée dans une phase aqueuse.

L'industrie tend à homogénéiser ces émulsions par des techniques appropriées (agitation ou homogénéisation à haute pression par exemple), et cherche à les stabiliser par des agents émulsifiants économiquement accessibles.

On connaît notamment la caséine qui est une protéine émulsifiante du lait. Un dérivé salin de la caséine, le caséinate de sodium, trouve une large application dans l'industrie alimentaire et tout particulièrement dans l'industrie des viandes de boucherie.

En effet, on retrouve le caséinate de sodium en tant qu'ingrédient fonctionnel lors de la fabrication de pâte fine pour produits du type « saucisse de Strasbourg » ou « mousse de foie ». Toutefois, le caséinate de sodium est très coûteux dans sa production.

D'autre part, l'industrie alimentaire est soumise à des règlementations strictes et à des normes de qualité exigeantes. Lors de la production d'articles issus de coproduits provenant de l'abattage d'animaux de boucherie destinés à des fins d'alimentations, lesdits articles doivent subir des étapes de lavage et/ou de sélection poussées. Ces étapes sont généralement accompagnées d'eaux dits eaux de procédés.

Les eaux de procédés sont généralement éliminées avec les autres effluents aqueux et traités avant rejet au milieu naturel. Une valorisation est difficilement applicable et limitée.

L'invention vient améliorer la situation.

À cet effet, l'invention vient introduire un procédé d'obtention de produit protéinique. Le procédé de l'invention comprend les étapes suivantes:
a. choisir des tissus d'animaux collectés en abattoirs et/ou ateliers de découpe,
b. traiter lesdits tissus pour obtenir un milieu décanté comprenant d'une part une phase solide et d'autre part une phase liquide,
c. dégraisser une partie au moins du milieu décanté de l'étape b., cette étape générant des eaux de procédés dégraissées,
d. isoler des protéines à partir des eaux de procédés dégraissées générées à l'étape c.

Ainsi, le procédé de l'invention permet l'obtention d'un produit protéinique et une valorisation d'eaux de procédés, provenant d'un traitement de tissus d'animaux. Le produit protéinique possède de fortes propriétés émulsifiantes et un grand intérêt économique, comme il sera détaillé plus loin.

L'étape b. peut comprendre la fonte de tissus d'animaux. Les tissus d'animaux sont préférentiellement des tissus adipeux d'espèce bovine. Ceci permet l'obtention d'un produit protéinique de propriétés physico-chimiques recherchées.

Selon un mode de réalisation les eaux de procédés dégraissées comprennent des premières eaux de procédés dégraissées issues du dégraissage de ladite phase liquide. Le dégraissage de la phase liquide peut être réalisé par centrifugation.

Les eaux de procédés dégraissées peuvent en outre comprendre des secondes eaux de procédés dégraissées, qui elles sont issues du dégraissage de ladite phase solide.

L'étape c. du procédé de l'invention peut comprendre les sous-étapes suivantes:
c1. dégraissage par lavage à l'eau de ladite phase solide, avec récupération des eaux de lavage, et
c2. dégraissage des eaux de lavage générant au moins une partie desdits eaux de procédés dégraissées.

Dans ce cas, le dégraissage par lavage à l'eau de la phase solide à l'étape c1. peut s'effectuer avec injection de vapeur d'eau à 90°C et avec ou sans présence d'une partie des eaux de procédés dégraissées issues du dégraissage de la phase liquide, comme décrit plus haut.

L'étape c2. est préférentiellement réalisée par centrifugation.

Selon un mode de réalisation, le traitement à l'étape b. du procédé de l'invention, est réalisé au moyen d'un décanteur centrifuge.

Le procédé peut comprendre une étape de :
e. conditionner les protéines isolées à l'étape d. sous forme de poudre.

Par ailleurs, l'isolation des protéines à l'étape d. est selon un mode de réalisation une extraction protéinique de rendement supérieur à environ 70%.

L'invention vient également introduire un produit émulsifiant obtenu par un procédé réalisé comme décrit ci-dessus.

D'autres avantages et caractéristiques de l'invention apparaîtront à la lecture de la description détaillée ci-après et sur les dessins annexés sur lesquels :
- la figure 1 représente un organigramme avec les principales étapes d'un mode de réalisation du procédé de l'invention,
- la figure 2 représente un organigramme avec les principales étapes d'une extraction protéinique selon un mode de réalisation de l'invention,
- la figure 3 est un graphique qui montre la capacité émulsifiante d'un produit protéinique obtenu selon le procédé de l'invention,
- la figure 4 est un graphique qui montre l'activité émulsifiante d'un produit protéinique obtenu selon le procédé de l'invention,
- la figure 5 est un graphique qui montre le pouvoir stabilisant d'un produit protéinique obtenu selon le procédé de l'invention, et
- la figure 6 est un graphique qui montre la gélification à froid d'un produit protéinique obtenu selon le procédé de l'invention.

Les dessins et la description ci-après contiennent, pour l'essentiel, des éléments de caractère certain. Ils font partie intégrante de la description, et pourront donc non seulement servir à mieux faire comprendre la présente invention, mais aussi contribuer à sa définition, le cas échéant.

On entend par dégraissage, dans la suite de la présente description, un dégraissage au moins partiel. Au sens de l'invention, un dégraissage ne veut donc pas nécessairement dire qu'il s'agit d'un dégraissage total d'un élément à dégraisser. En conséquence, un élément dégraissé de la description, pourra contenir un faible taux de graisse.

De plus, on entend par graisse, l'ensemble des lipides d'un élément de l'invention. L'élément peut être notamment du tissu adipeux ou un tout autre élément intervenant dans le procédé de l'invention comme par exemple une phase liquide.

Par produit protéinique on entend ici un produit contenant des protéines, mais n'étant pas nécessairement constitué exclusivement de protéines. En effet, selon différent modes opératoires du procédé de l'invention, on obtiendra un produit protéinique d'une composition modérément variable. Ceci sera détaillé plus loin. Toutefois, cette variabilité de composition se restreint à un pourcentage variable de protéines, de lipides, et d'autres éléments non détaillés ici.

On revient maintenant plus en détail sur les procédés de traitement de tissu d'animaux, et plus particulièrement sur les procédés de traitement de tissu d'animaux avec dégraissage de la fraction protéique. Les tissus adipeux sont généralement collectés en abattoirs lors des opérations de préparation de la carcasse (émoussage, parage) mais pas uniquement ils peuvent aussi être collectes en ateliers de découpe ou ateliers de désossage/désossement.

On comprend que la collecte de tissus adipeux varie selon la matière première. Par exemple pour la collecte à partir d'os, ces derniers sont généralement broyés et trempés dans un bain d'eau chaude. Cette étape décroche les tissus adipeux des os et permet une collecte desdits tissus dans un dispositif de type tricanteur.

Ces types de procédés sont notamment connus pour former des produits nobles à haute teneur en protéine, dits crétons.

De manière générale, après découpe de la viande, il reste de la graisse et de la viande. La graisse et les restes de viande sont récupérés et valorisés par des ateliers spécialisés comme les fondoirs. Les fondoirs ont pour but de fondre la graisse et la viande et de séparer par des étapes de sélection ladite graisse de la viande restante. En effet, la graisse et la viande forment le tissu adipeux et ne sont pas séparables de manière simple. Après séparation de la viande, celle-ci est séchée pour former ce que l'on appelle le créton. Comme évoqué plus haut, le créton est très riche en protéine (teneur supérieur à 95%). Le créton trouve son application par exemple dans le domaine des substituts alimentaires, ou encore dans l'alimentation animale.

Le but primaire, classiquement recherché de ce type de procédé de traitement, vise donc la récupération de viande sur les déchets d'abattoir. Les autres produits générés lors de la formation de créton, sont d'une part des graisses et d'autre part des eaux de procédés encore appelées eaux industrielles ou eaux résiduelles. La graisse peut être valorisée à son tour et trouve son application notamment dans le domaine alimentaire, l'alimentation animale ou l'industrie des corps gras (cosmétique, lipophilie etc.).

Il n'en est pas de même pour les eaux de procédés dans les établissements spécialisés comme les fondoirs, elles ne sont généralement pas valorisées.

La Demanderesse a découvert non sans surprise que les eaux de procédés des ateliers spécialisés du type fondoirs peuvent être valorisées.

Tout d'abord, on revient sur un procédé de traitement de tissus adipeux, tels qu'on les retrouve dans les ateliers spécialisés du type fondoirs. On comprend que certaines étapes varient selon la matière première utilisée.

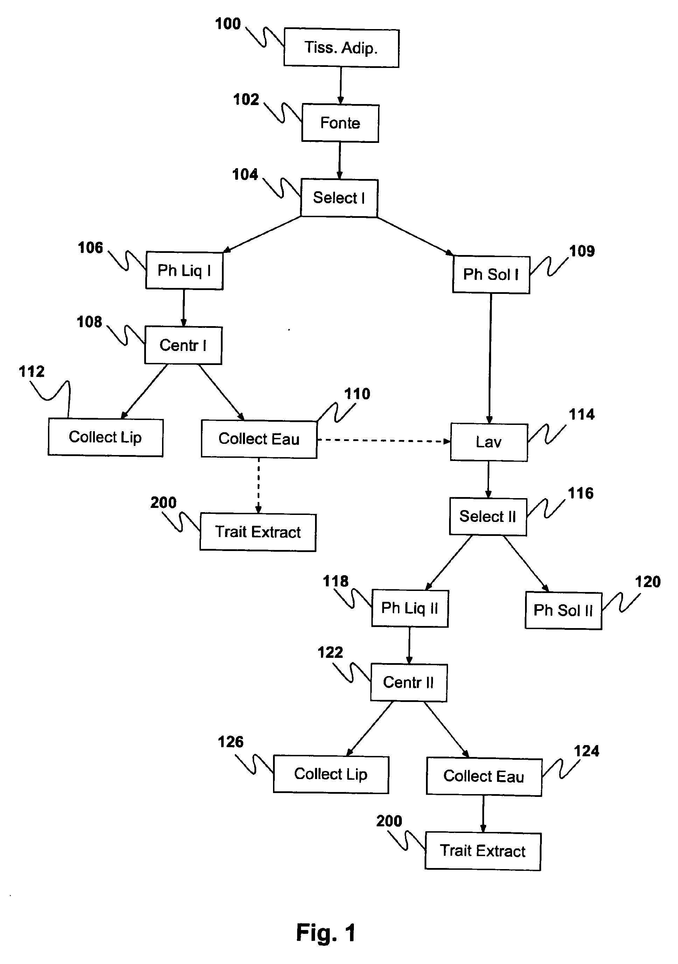

La figure 1 montre un organigramme avec les principales étapes d'un mode de réalisation du procédé de l'invention.

Une première opération 100 consiste à sélectionner ou à choisir des tissus d'animaux. Selon le mode de réalisation décrit, on choisit du tissu adipeux d'espèce bovine. Ce tissu adipeux est de la graisse brute d'abattoir, du tissu adipeux de découpe ou encore du tissu adipeux des os.

La première opération 100 comprend un traitement par tricanteur lorsqu'on traite du tissu adipeux d'os ou encore un simple broyage de tissu adipeux choisi. Le tissu est broyé par un dispositif du type broyeur à couteau par exemple. Le tissu adipeux broyé est ensuite dirigé vers un tube de fusion dans lequel a lieu une opération de fonte 102.

Dans le mode de réalisation décrit ici, l'opération de fonte 102 consiste à injecter de la vapeur vive à 3 bars et à 130°C, en vue de fondre le tissu adipeux. Au contact de la vapeur, le tissu adipeux est liquéfié instantanément. Dans une opération suivante de sélection 104, le tissu adipeux fondu est dirigé vers un ou plusieurs décanteurs centrifuges pour une première séparation liquide solide. Pendant l'opération 104, le tissu adipeux est maintenu à une température comprise entre 88°C et 92°C et est préférentiellement maintenu à 90 °C. Une température de 90°C assure que le tissu adipeux garde une bonne fluidité en restant à l'état liquide. La séparation à l'opération de sélection 104 peut être réalisée par une force centrifuge de 4000g avec un temps de passage d'environ 5 secondes. Bien évidement, l'opération 104 de séparation n'est pas limitée à l'utilisation d'un seul décanteur centrifuge. Selon ce mode de réalisation, on utilise deux décanteurs centrifuges. Un décanteur centrifuge sépare de manière continue des solides, d'une ou plusieurs phases liquides. Généralement, les particules solides se trouvent plaquées contre une paroi d'un bol en rotation, alors que la phase liquide forme une couche concentrique à l'intérieur du bol. Les solides sont évacués du bol en continu, par exemple au moyen d'une vis convoyeuse qui tourne à une vitesse différente de celle du bol. Les solides sont alors emportés vers la périphérie de la couche liquide et convoyés le long de l'extension conique du bol. Par la force centrifuge, la face solide est alors concentrée en essorant le surplus de liquide. La phase solide est alors extraite du bol, tandis que la ou les phases liquides clarifiées du solide sont évacuées par débordement par une extrémité opposée. De tels décanteurs centrifuges sont par exemple fabriqués par la Société ALPHA LAVAL SEPARATION.

L'opération de sélection 104 permet donc une première séparation liquide/solide avec récupération dans une opération 106 de la phase liquide et récupération de la phase solide lors d'une opération 109. À l'opération 106, la phase liquide comprend un mélange d'eau et de graisses. À ce stade, la phase liquide est toujours maintenue à 90°C. Après l'opération 106, la phase liquide obtenue par l'opération 104 est purifiée dans une opération 108. La purification a lieu en vue d'obtenir d'un côté des eaux de procédés et de l'autre côté de la graisse purifiée.

Pour cette opération 108, et selon le mode de réalisation décrit, on utilise un ou plusieurs séparateurs centrifuges à disques.

Un séparateur centrifuge à disques est conçu pour séparer de manière continue des solides d'une ou plusieurs phases liquides. Pour cela, il intervient des forces centrifuges élevées et notamment, selon le mode de réalisation décrit, 7000g. Cela permet une séparation rigoureuse. Les particules solides soumises à de telles forces centrifuges se trouvent plaquées contre la paroi d'un bol en rotation, alors que les phases liquides, moins denses que la phase solide, forment des couches internes concentriques.

De tels séparateurs centrifuges à disques sont notamment fabriqués par la Société ALPHA LAVAL SEPARATION.

Pendant l'opération 108, la phase liquide est toujours à 90°C et le temps de passage sur le séparateur centrifuge à disques est d'environ 2 secondes. Lors de l'opération 110, on récolte de l'eau de procédé, tandis que dans l'opération 112, on récolte des graisses qui par la suite pourront subir des phases de purification plus fine pour être stockées et valorisés.

L'eau récupérée lors de l'opération 110 va, selon le mode de réalisation décrit, être soumise à un traitement d'extraction 200 en vue d'isoler des protéines à partir de cette eau de procédé dégraissée générée lors de l'opération 108. Selon un autre mode de réalisation de l'invention, l'eau récupérée à l'opération 110 peut au moyen d'une boucle de recirculation être reconduite vers une autre étape (ici opération 114) du procédé de l'invention comme on le verra plus loin.

À l'opération 109, il a été récupéré une phase solide après la séparation de l'opération 104. Cette phase solide de l'opération 109 comprend du créton humide et des graisses. La phase solide est ensuite dirigée vers une opération 114, dont l'objectif est le lavage dudit créton par de l'eau chaude en vue d'un dégraissage. Cette opération selon un mode de réalisation est effectuée à l'intérieur d'une cuve de forme conique et équipée d'une pompe de recirculation, de débit 10m³/h. La pompe de recirculation permet en outre le bon mélange pour assurer l'homogénéité de phase requise lors d'un lavage de créton. L'opération 114 est maintenue à une température de 90°C par une injection de vapeur vive et sous contrôle d'un régulateur.

Incidemment, on note que dans l'art antérieur les crétons sont généralement dégraissés par une opération de pressage.

L'opération 114 consiste donc à dégraisser par lavage à l'eau le créton humide.

Selon un mode de réalisation et comme invoqué plus haut, l'eau de procédé de l'opération 110 peut être reconduite à l'aide d'une boucle de recirculation vers l'opération 114 pour assister au lavage du créton humide. Le lavage de l'opération 114 peut donc être réalisé par de l'eau de lavage d'une part, et de l'eau de procédé d'autre part.

A l'aide d'une pompe et d'un régulateur, on dirige une quantité contrôlée de l'ensemble créton lavé-eau (injectée et de procédé)-graisse vers une opération de sélection 116, comparable à l'opération 104 décrite plus haut. À l'opération 116, on sépare de nouveau une phase liquide d'une phase solide, avec récupération de la phase liquide d'un côté : opération 118, et récupération de la phase solide de l'autre coté : opération 120. La phase solide de l'opération 120 est du créton humide dégraissé qui, par la suite, pourra subir un traitement de séchage pour être valorisé comme substitut alimentaire par exemple.

La phase liquide de l'opération 118 est un mélange eau/graisses similaire à la phase liquide de l'opération 106. Une opération 122 similaire à l'opération 108 comprend un traitement de la phase liquide, au moyen d'une centrifugeuse à disques. Ce traitement permet une séparation liquide/solide.

Après séparation par l'opération 122, on récupère d'un côté les graisses : opération 126, et des eaux de procédés de l'autre côté : opération 124. Les graisses de l'opération 126 peuvent être traitées similairement à ceux récoltés à l'opération 112, à savoir subir le cas échéant un traitement de stérilisation en vue du stockage pour une valorisation ultérieure. Les eaux de procédés de l'opération 124 sont conduites vers l'opération 200 en vue d'isoler des protéines à partir de ces eaux de procédés dégraissées générées à l'opération 122. On rappelle ici que les eaux de procédés peuvent contenir un faible résidu de graisses dont le taux ne va pas haut delà d'environ 1%. L'isolation des protéines à partir des eaux de procédés, peut être faite selon toute méthode connue dans l'art du type extraction protéinique.

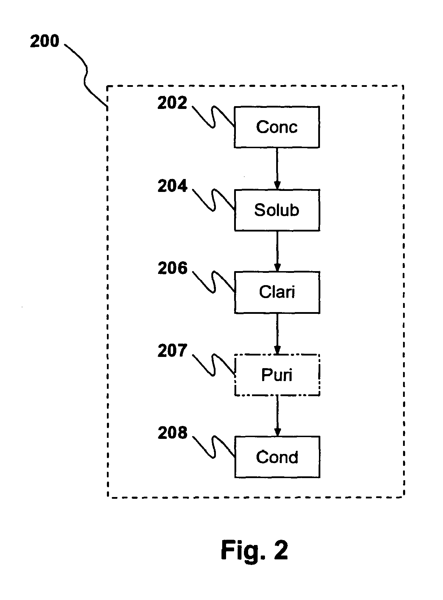

La figure 2 représente un organigramme avec les principales étapes d'un traitement d'extraction protéinique 200. Une telle extraction, et selon le mode de réalisation décrit ici, commence par une opération de concentration 202 qui consiste à concentrer sous vide les protéines présentes dans les eaux résiduelles. L'opération de concentration 202 comprend principalement l'évaporation de l'eau.

On obtient alors un concentrat brut de protéines qui subit une opération d'extraction/solubilisation 204 comprenant principalement une solubilisation du concentrat brut de protéines dans de l'eau, suivie d'un ajustement du pH réalisé par de l'acide chlorhydrique (HCl) ou de la soude (NaOH), ainsi qu'une homogénisation. Les paramètres choisis pour l'opération 204 sont récapitulés dans le tableau 1. Bien évidemment, selon le rendement visé, ces paramètres peuvent varier dans une limite raisonnable connue à l'homme du métier.

**Tableau 1**

| | Limite inférieure | Limite supérieure | Valeur préférentielle |
|---|---|---|---|
| pH | 4 | 9 | 9 |
| Dilution [concentrat : eau] | 1:1 | 1:4 | 1:1 |
| Temps d'extraction [min] | 15 | 60 | 60 |
| Taux de sel [%poids] | 0 | 1 | 0 |
| Vitesse centrifugation [g] | 3000 | 10000 | 10000 |
| Température centrifugation [°C] | 20 | 35 | 20 |

L'opération 204 est suivie d'une opération 206 de clarification qui consiste généralement en une étape de centrifugation. L'étape de centrifugation dure environ 10 min et permet une élimination de résidus solides (impuretés, particules protéiniques etc.) de taille importante. Après centrifugation, on distingue généralement trois phases :
- une phase supérieure comprenant principalement des graisses,
- une phase intermédiaire généralement liquide que l'on qualifie ici de "surnageant", et
- une phase inférieure comprenant essentiellement les résidus solides mentionnés plus haut.

Le produit protéinique de l'invention se situe principalement dans le surnageant.

Selon l'usage envisagé du produit protéinique, l'opération 206 de clarification peut être suivie par une opération de fractionnement/purification 207. Toutefois, généralement le produit protéinique est d'une pureté satisfaisante après l'opération 206 de clarification, auquel cas on procède directement à l'opération 208 pour conditionnement décrite plus loin.

L'opération de fractionnement/purification 207 optionnelle, trouve notamment son application lorsqu'il est envisagé une utilisation du produit protéinique à un niveau de laboratoire de recherche. L'opération 207 comprend une étape de filtration de type tangentielle. Ce type de filtration est couramment utilisé pour purifier et pour concentrer un produit protéinique. La technique de la filtration tangentielle est de type à faire circuler un liquide tangentiellement à une membrane poreuse et d'appliquer une différence de pression à travers cette membrane (pression transmembranaire, PTM). Cette différence de pression constitue la force motrice de la filtration et génère un flux de perméation qui entraîne des macromolécules protéiniques à passer à travers la membrane poreuse. La membrane, de par sa porosité (par exemple avec une surface filtrante de 0,005 m²), laisse passer des molécules dont la taille est inférieure à celle des pores et retient toutes autres molécules. Cette filtration permet donc une séparation des molécules selon leur taille. La filtration tangentielle peut être de nature ultrafiltration

Une opération finale 208 vise le conditionnement du produit protéinique obtenu par le traitement d'extraction protéinique 200. L'opération 208 peut comprendre un séchage par pulvérisation ou atomisation sur une tour de séchage, voir une lyophilisation.

Comme mentionné plus haut, les tissus adipeux choisis peuvent être de provenance variée. La Demanderesse a notamment mis en oeuvre le procédé de l'invention sur des tissus adipeux d'espèce bovine provenant :
- de gras brut d'abattoirs que l'on appellera dans la suite Ligne 1,
- de gras d'os que l'on appellera dans la suite Ligne 2, et
- de gras de découpe que l'on appellera dans la suite Ligne 3.

La composition des eaux résiduelles après dégraissage de chaque Ligne est variable. Le tableau 2 montre les différentes compositions.

**Tableau 2**

| | Ligne 1 | Ligne 2 | Ligne 3 |
|---|---|---|---|
| Matière Sèche | 6,8% | 9,0% | 3,6% |
| Total Protéines (Collagène + Protéines solubles) | 2,5% | 3,8% | 2,4% |
| Collagène | 1,4% | 2,0% | 1,4% |
| Protéines solubles | 1,1% | 1,8% | 1,1% |
| Lipides | 3,8% | 3,3% | 0,6% |

Le taux de matière sèche met en rapport le poids de la matière sèche avant et après élimination d'eau dans un échantillon. La détermination de la matière sèche dans un échantillon est réalisée en éliminant l'eau contenue dans un échantillon et en déterminant la perte de masse en conséquence.

Cette méthode de détermination du taux de la matière sèche est issue de la norme NF V 04-401.

Par "total protéines", on entend l'ensemble collagène / protéines solubles dont on détermine le taux, par exemple par la méthode Kjeldahl (norme : NF V 04-407). La méthode Kjeldahl utilise la quantité d'azote totale présente dans un échantillon. Il s'agit d'une méthode d'estimation de la quantité de protéines en se basant sur l'idée que dans un échantillon donné, il n'y a pas de sources d'azote autres que des protéines.

Généralement on minéralise un échantillon par chauffage avec de l'acide sulfurique concentré en présence d'un catalyseur pour ensuite doser l'échantillon au moyen d'une base de sorte que l'azote présent dans ledit échantillon soit sous forme d'ammoniaque. L'ammoniaque est distillé et récupéré dans une solution d'acide borique. Finalement, on effectue un dosage de l'ammoniaque par de l'acide chlorhydrique pour obtenir le taux d'azote dans l'échantillon. La méthode Kjeldahl fait intervenir une constante par laquelle est multiplié le taux d'azote (constante = 6,25) pour déterminer le taux de protéines dans l'échantillon. On note que la constante est un coefficient de conversion communément valable pour les protéines de nature animale.

La détermination de la quantité de collagène se fait au moyen d'un dosage de la L-hydroxyproline qui est un composant du collagène. La méthode comprend une hydrolyse du collagène par chauffage et en présence d'acide chlorhydrique. Une fois hydrolysé, l'hydrolysat composé d'hydroxyproline est filtré et dilué puis neutralisé. Ensuite, la L-hydroxyproline est oxydée grâce à la chloramine T. Dans une dernière étape, un composé coloré est formé à partir de l'hydroxyproline oxydée, notamment par l'ajout de para-diméthyl-aminobenzaldéhyde. La concentration est alors déterminée par photométrie à 558 nm.

Dans le cas présent, le taux de L-hydroxyproline déterminé par les mesures photométriques est multiplié par un facteur 8 pour obtenir le taux de collagène présent dans les eaux.

Dans la présente description, on entend par "protéines solubles" les protéines présentes dans les eaux qui ne sont pas du collagène. Leur taux se détermine alors par soustraction du taux de collagène au taux de protéines total.

Le taux de lipides présents dans les eaux est déterminé à partir de la matière sèche. Pour cela on extrait des lipides de la matière sèche au moyen d'un agent d'extraction comme l'éther de pétrole. L'éther de pétrole est ensuite éliminé par évaporation. Le taux de lipides peut être déterminé par pesée de masse.

La détermination du taux de lipides présents dans les eaux permet un contrôle de qualité de ces derniers. En effet, on cherche à éliminer les lipides lors de la valorisation du produit protéinique de l'invention.

Le tableau 3 montre des conditions opératoires d'un mode de réalisation pour le traitement d'extraction et précisément pour l'opération d'extraction 204. La régulation du pH peut se faire par ajout d'acide chlorhydrique (HCl) dilué ou de soude (NaOH) diluée.

**Tableau 3**

| | Ligne 1 | Ligne 2 | Ligne 3 |
|---|---|---|---|
| pH d'extraction | 4 | 9 | 4 |
| Température d'extraction | 40°C | 20°C | 20°C |
| Rendement d'extraction | 70% | 80% | 87% |
| Protéines/Matière Sèche | 76% | 71 % | 76% |

La Demanderesse à découvert de manière surprenante, que le produit protéinique obtenu par le procédé de l'invention appliqué à chaque Ligne, montre des caractéristiques émulsifiantes inattendues. En effet, les caractéristiques fonctionnelles en tant qu'agent émulsifiant du produit protéinique obtenu par l'invention, sont comparables, voir supérieur, à la référence internationale : le caséinate de sodium. Les émulsions formées par ledit produit protéinique sont plus fines et plus stables que celles formées avec le caséinate de sodium. Il s'ensuit un grand intérêt économique : d'une part l'invention permet la valorisation des eaux résiduelles et d'autre part le produit protéinique obtenu par l'invention peut venir remplacer le caséinate de sodium en tant qu'agent émulsifiant. On notera que le prix commercial du produit protéinique obtenu par le procédé de l'invention, se situe largement en dessous du prix actuel du caséinate de sodium qui se trouve à environ 11,5€/Kg.

On remarquera ici que par produit protéinique obtenu par l'invention, on peut aussi bien comprendre, chaque produit protéinique isolé à partir de chacune des Lignes 1, 2 ou 3 prise séparément, ou alors l'ensemble du mélange d'au moins deux Lignes. Le produit protéinique obtenu par l'invention, peut donc selon un mode de réalisation, être un produit protéinique comprenant l'ensemble des produits protéiniques obtenus de chacune des Lignes 1, 2 et 3.

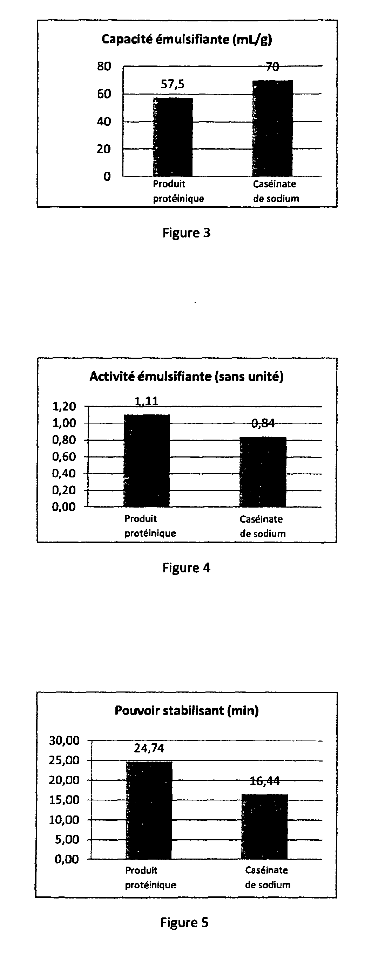

Les figures 3, 4 et 5 montrent respectivement la capacité émulsifiante, l'activité émulsifiante et le pouvoir stabilisant du produit protéinique obtenu par l'invention, comparés à ceux du caséinate de sodium.

On entend par "capacité émulsifiante" la faculté d'un produit protéinique de mettre en émulsion une quantité d'huile donnée. Cette capacité peut être déterminée par 100 g d'une solution contenant environ 2% de produit protéinique, dans laquelle on ajoute goutte à goutte, sous agitation, de l'huile, notamment de l'huile de tournesol. Cette manipulation continue jusqu'à obtention de deux phases distinctes (apparition de gouttes d'huile). On détermine alors en millilitres, la quantité d'huile par gramme de produit protéinique.

L'activité émulsifiante est déterminée par l'absorbance d'une émulsion huile dans eau en présence d'un produit protéinique dont l'activité émulsifiante est à déterminer. La détermination de l'activité émulsifiante de la figure 4 est réalisée par 100 g d'une solution aqueuse à 0,1 % de produit protéinique de l'invention. 20 ml de cette solution sont mélangés à 6,6 ml d'huile de tournesol. L'émulsion huile dans eau est alors agitée pendant une minute, par exemple au moyen d'un mélangeur de type ULTRATURRAX. On dilue ensuite 50 µl de l'émulsion huile dans eau dans 5 ml d'une solution à 0,1 % en SDS, puis on mesure l'absorbance à 500 nm. On note que l'activité émulsifiante est une grandeur sans unité.

Le pouvoir stabilisant permet de déterminer la stabilité des émulsions créées au moyen d'un produit protéinique donné. La détermination du pouvoir stabilisant s'effectue à la suite de la mesure de l'activité émulsifiante. En effet, selon le mode de réalisation décrit, 10 mn après l'émulsification réalisée pour la détermination de l'activité émulsifiante, on remesure l'absorbance du mélange émulsion/SDS décrit ci-dessus. Le pouvoir stabilisant peut alors être calculé par la formule suivante :
Eₛ= A₀t / A₀ - A₁₀; où ici : Eₛ = pouvoir stabilisant ; A₀ = absorbance à t = 0 ; A₁₀ = absorbance à t= 10 min ; t = 10 min.

La capacité émulsifiante du produit protéinique obtenu selon le mode de réalisation de l'invention décrit, est d'environ 80% de la capacité émulsifiante du caséinate de sodium. Ledit produit protéinique présente une activité émulsifiante et un pouvoir stabilisant nettement supérieurs à ceux du caséinate de sodium.

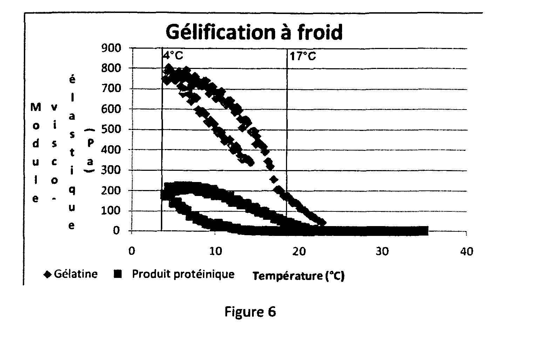

La figure 6 montre la gélification à froid d'un produit protéinique selon un mode de réalisation de l'invention, comparée à une référence communément utilisée: la gélatine.

La température de gélification est mesurée par rhéométrie à faible déformation. Ce type de rhéométrie donne également accès au module viscoélastique

Les solutions comprenant le produit protéinique de l'invention (mélange Ligne 1, Ligne 2 et Ligne 3) montrent la formation d'un gel pour des températures ≤17°C. Des analyses de pénétrométrie ont montré une force à la rupture de 20 g/cm² à température ambiante (Gélatine : 75 g/cm²). Le tableau 4 montre les propriétés gélifiantes de solutions comprenant le produit protéinique de chacune des Lignes 1, 2 ou 3 prises séparément.

**Tableau 4**

| | Module Viscoélastique | Température (Gel) | Concentration minimale de gélification |
|---|---|---|---|
| Gélatine | 800 | 20°C | 4% |
| Ligne 1 | 270 | 15°C | 3% |
| Ligne 2 | 320 | 20°C | 3% |
| Ligne 3 | 200 | 15°C | 3% |

Parmi les nombreuses applications industrielles possibles de l'invention, on trouve notamment l'utilisation du produit isolé du procédé selon l'invention, comme agent de suspension dans l'alimentation et particulièrement dans l'alimentation produite dans l'industrie de boucherie.

## Revendications

1. Procédé d'obtention de produit protéinique,
**caractérisé en ce qu'**il comprend les étapes suivantes:
a. choisir des tissus d'animaux collectés en abattoirs et/ou ateliers de découpe,
b. traiter lesdits tissus pour obtenir un milieu décanté comprenant d'une part une phase solide et d'autre part une phase liquide,
c. dégraisser une partie au moins du milieu décanté de l'étape b., cette étape générant des eaux de procédés dégraissées,
d. isoler des protéines à partir des eaux de procédés dégraissées générées à l'étape c.

2. Procédé selon la revendication 1, **caractérisé en ce que** l'étape b. comprend la fonte desdits tissus d'animaux.

3. Procédé selon l'une des revendications précédentes, **caractérisé en ce que** les eaux de procédés dégraissées comprennent des premières eaux de procédés dégraissées issues du dégraissage de ladite phase liquide.

4. Procédé selon la revendication 3, **caractérisé en ce que** le dégraissage de la phase liquide est réalisé par centrifugation.

5. Procédé selon l'une des revendications précédentes, **caractérisé en ce que** les eaux de procédés dégraissées comprennent des secondes eaux de procédés dégraissées issues du dégraissage de ladite phase solide.

6. Procédé selon l'une des revendications précédentes, **caractérisé en ce que** l'étape c. comprend les sous-étapes:
c1. dégraissage par lavage à l'eau de ladite phase solide, avec récupération des eaux de lavage, et
c2. dégraissage des eaux de lavage générant au moins une partie desdits eaux de procédés dégraissées.

7. Procédé selon la revendication 6 prise en combinaison avec la revendication 3, **caractérisé en ce que** le dégraissage par lavage à l'eau de ladite phase solide à l'étape c1. s'effectue en présence d'une partie au moins des eaux de procédés dégraissées issues du dégraissage de ladite phase liquide.

8. Procédé selon la revendication 6 ou 7, **caractérisé en ce que** le dégraissage par lavage à l'eau de ladite phase solide à l'étape c1. comprend l'injection de vapeur d'eau à 90°C.

9. Procédé selon la revendication 6 à 8, **caractérisé en ce que** l'étape c2. est réalisée par centrifugation.

10. Procédé selon l'une des revendications précédentes, **caractérisé en ce que** le traitement à l'étape b. est réalisé au moyen d'un décanteur centrifuge.

11. Procédé selon l'une des revendications précédentes, **caractérisé en ce que** les tissus d'animaux sont des tissus adipeux d'espèce bovine.

12. Procédé selon l'une des revendications précédentes, **caractérisé en ce qu'**il comprend en outre l'étape de :
e. conditionner les protéines isolées à l'étape d. sous forme de poudre.

13. Procédé selon l'une des revendications précédentes, **caractérisé en ce que** l'isolation des protéines à l'étape d. est une extraction protéinique de rendement supérieur à environ 70%.

14. Produit émulsifiant obtenu par le procédé selon l'une des revendications précédentes.
